# EUROPEAN PATENT APPLICATION

(11) **EP 1 737 193 A1**
(43) Date of publication of application: **27.12.2006**
(21) Application number: 05300496.6
(22) Date of filing: 21.06.2005
(51) Int. Cl.: H04L 29/08

(54) **A method or apparatus for managing a function of a mobile device**

(71) Applicant: Hewlett-Packard Development Company, L.P., Houston, TX 77070 (US)
(72) Inventor: Kyriakides, Lionel, 38053 Grenoble Cedex 09 (FR); Wieczorek, Philippe, 38053 Grenoble Cedex 09 (FR)
(74) Representative: Lloyd, Richard Graham

(57) **Abstract**

A method and apparatus is disclosed for managing a function of a mobile device (101) in which a function of the mobile device is at least partially disabled if the device exceeds a velocity (113) threshold.

## Description

### Field of Invention

The present invention relates to a method or apparatus for managing a function of a mobile device.

### Background of the Invention

The use of mobile communications devices such as mobile telephones is increasingly common with mobile communications networks covering a large proportion of the population. One problem with the use of such devices is that the user's attention can be dangerously distracted from other important tasks that the user attempts to carry out simultaneously with the use of the mobile device. Such tasks may include driving a vehicle such as a car, lorry or bus, or taking a part in a sport such as skiing, cycling or sailing. The use of handheld telephones while driving a vehicle has been made illegal in many countries in an attempt to curb such dangerous behavior. However, policing such laws where they exist is difficult and costly. Furthermore, curbing dangerous use of mobile devices where no such laws exists is even more difficult.

### Summary of the Invention

An embodiment provides a method for managing a function of a mobile device, the method comprising the steps of:
a) receiving a first set of geographical position data for a mobile device;
b) receiving a second set of geographical position data for the mobile device;
c) calculating the velocity of the mobile device from the first and second sets of geographical position data; and
d) if the velocity exceeds a predetermined threshold velocity then at least partially disabling a function of the mobile device.

The method may comprise the further step of comparing the second set of data to mapping data defining one or more areas of unrestricted device use and if the data defines a geographical position of the device within one of the areas then omitting step d). The method may comprise the further step of comparing the second set of data to mapping data defining one or more areas, each area associated with a predetermined velocity threshold, and if the data defines a geographical position of the device within one of the areas then modifying the predetermined threshold for step d) accordingly.

The geographical position data may include altitude. The device may be a communications device and the first and second sets of data may be received from the mobile device by an element of a communications network. Any restriction of function of the mobile device may be carried out under the control of the communications network. Any restriction of function of the mobile device may be carried out by the mobile device under the instruction of the communications network. Steps a) to d) may be carried out by the mobile device.

The geographical position data may be derived from a global positioning system (GPS) device. The GPS device may be associated with or part of the mobile device. The mobile device may be connected to the communications network via wireless transceivers and the geographical position data may be derived from the signals received from the device by the network using a signal triangulation process.

The mobile device may receive a signal from one or more signal devices, the signal devices defining one or more fixed physical zones within a moveable physical space, and receipt of the signal(s) is used in conjunction with the velocity to determine the functions of the mobile device which are disabled in step d). One or more of the signal devices may define a zone within which a function of the mobile device is enabled regardless of the velocity. A function of the mobile device may disabled in step d) only if a signal is received from one or more of the signal devices. A signal device may be carried with the mobile device, and receipt of a signal from the signal device may cause a function of the mobile device to be enabled regardless of the velocity. The signal devices may define at least two zones, and receipt by the mobile device of signals for each the zone may cause different functions of the mobile device to be disabled in step d). The two zones may intersect and within the intersection, the effect of the signal from one zone overrides that of the other.

Other embodiments provide apparatus for managing a function of a mobile device comprising:
a geographical position data receiver operable to receive a first set of geographical position data for a mobile device;
the receiver being further operable to receive a second set of geographical position data for the mobile device;
a processor operable to calculate the velocity of the mobile device from the first and second sets of geographical position data; and
a mobile device controller operable if the velocity exceeds a predetermined threshold velocity to at least partially disable a function of the mobile device.

Some embodiments provide apparatus for managing a function of a mobile device comprising:
means for receiving a first set of geographical position data for a mobile device;
means for receiving a second set of geographical position data for the mobile device;
means for calculating the velocity of the mobile device from the first and second sets of geographical position data; and
means operable if the velocity exceeds a predetermined threshold velocity for at least partially disabling a function of the mobile device.

Other embodiments provide an application server for a mobile communications network, the server comprising:
a position data receiving module for receiving geographical position data for a mobile device;
a processor operable to calculate the velocity of the mobile device from the geographical position data; and
a mobile device controller operable if the velocity exceeds a predetermined threshold velocity to at least partially disable a function of the mobile device.

Further embodiments provide a mobile communications device operable to:
receive data defming the location of the device;
calculate the velocity of the device using the data; and
if the velocity exceed a threshold then to disable one or more functions of the communications device. The disabled function may be the voice calling function.

Some embodiments provide a software program or group of software programs arranged to enable a programmable device or group of programmable devices to carry out a method for managing a function of a mobile device, the method comprising the steps of:
a) receiving a first set of geographical position data for a mobile device;
b) receiving a second set of geographical position data for the mobile device;
c) calculating the velocity of the mobile device from the first and second sets of geographical position data; and
d) if the velocity exceeds a predetermined threshold velocity then at least partially disabling a function of the mobile device.

Further embodiments provide a software program or group of software programs arranged to enable a programmable device or group of programmable devices to provide apparatus for managing a function of a mobile device comprising:
a geographical position data receiver operable to receive a first set of geographical position data for a mobile device;
the receiver being further operable to receive a second set of geographical position data for the mobile device;
a processor operable to calculate the velocity of the mobile device from the first and second sets of geographical position data; and
a mobile device controller operable if the velocity exceeds a predetermined threshold velocity to at least partially disable a function of the mobile device.

Some embodiments provide a software program or group of software programs arranged to enable a programmable device or group of programmable devices to provide apparatus for managing a function of a mobile device comprising:
means for receiving a first set of geographical position data for a mobile device;
means for receiving a second set of geographical position data for the mobile device;
means for calculating the velocity of the mobile device from the first and second sets of geographical position data; and
means operable if the velocity exceeds a predetermined threshold velocity to at least partially disable a function of the mobile device.

Other embodiments provide a software program or group of software programs arranged to enable a programmable device or group of programmable devices to provide an application server for a mobile communications network, the server comprising:
a position data receiving module for receiving geographical position data for a mobile device;
a processor operable to calculate the velocity of the mobile device from the geographical position data; and
a mobile device controller operable if the velocity exceeds a predetermined threshold velocity for at least partially disabling a function of the mobile device.

Some embodiments provide a software program or group of software programs arranged to enable a programmable device or group of programmable devices to provide a mobile communications device operable to:
receive data defming the location of the device;
calculate the velocity of the device using the data; and
if the velocity exceed a threshold then to disable one or more functions of the communications device.

### Brief Description of the Drawings

Embodiments will now be described, by way of example only, with reference to the accompanying drawings in which:
Figure 1 is a schematic illustration of a mobile communications network;
Figure 2 is a flow chart illustrating processing carried out by elements of the network of figure 1 in accordance with an embodiment; and
Figures 3, 4 and 5 are schematic illustrations of vehicles viewed from above in which the use of mobile devices may be restricted in accordance with other embodiments.

### Detailed Description of Embodiments

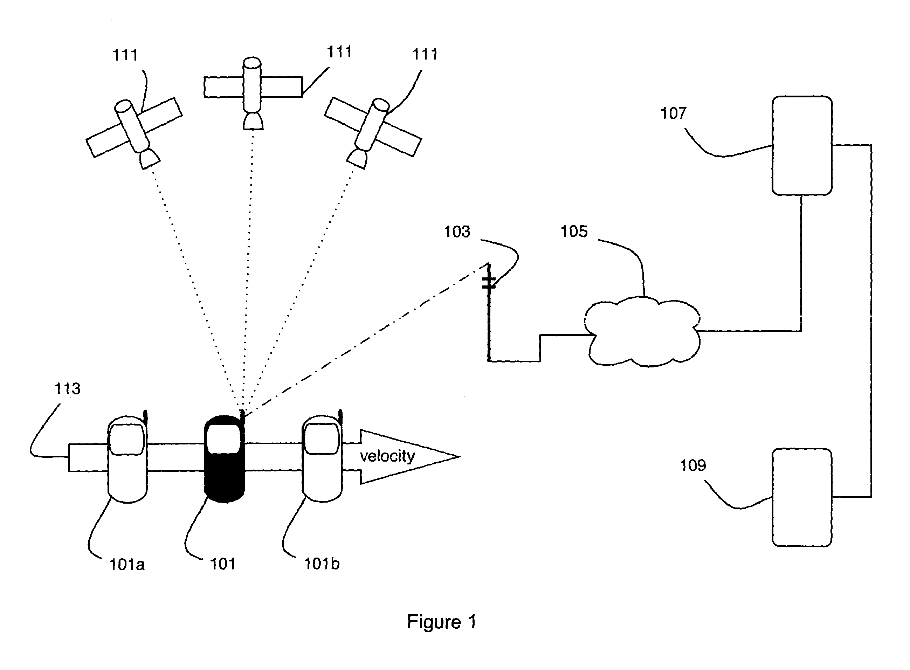

With reference to figure 1, a mobile device 101 in the form of a mobile telephone is connected to a transceiver 103 of a mobile communications network 105 in the form of a GSM/GPRS network (Global System for Mobile Communications/General Packet Radio Service). A computer in the form of a service control platform (SCP) 107 is also connected to the network 105 and to another computer in the form of an application server 109. The SCP provides the service control function (SCF) that defines the intelligent network (IN) control environment for network 105. The SCF stores the service logic associated with IN services. The mobile telephone 101 can be used to access services provided by the network under the control of the SCP. The services include the making and receiving of voice calls and receiving, sending or accessing data over the network 105.

The mobile device 101 includes a global positioning system (GPS) device which uses received signals from satellites 111 to determine data defining the geographical position of the mobile device. As the mobile device moves through successive positions 101a, 101b, successive sets of geographical position data are received from the GPS device. In the arrangement of figure 1, the application server 109 runs an application program (AP) which is arranged to poll the mobile device via the network at predetermined polling intervals. Each polling interval the AP requests the position data from the mobile device. This position data is then used to calculate the velocity 113 of the mobile device. The velocity and the current position of the mobile device is used by the AP to determine whether or not the various services provided by the network to the mobile device should be enabled or disabled. Some services may be partially enabled or disabled. If the AP determines that a given service such as voice calling should be disabled, it sends a signal to the SCP to disable the voice calling facility of the mobile device.

The AP uses two sets of data to determine if services should be enabled or disabled. The first set of data is a usage policy as set out in table 1 below:

**Table 1:**

| Location Type | Velocity Threshold | Service Restriction |
|---|---|---|
| Road | 20 | All voice calls |
| Off Road | 15 | Only hands free voice calls |
| Air | 00 | All services |
| Sea | 30 | Outgoing voice calls |
| Rail | - | None |

As shown in table 1 above, the usage policy defines a set of geographical location types such as road, off-road, rail, sea and air. Each location type has a corresponding velocity threshold and service restriction. The second set of data used by the AP is mapping data which enables the AP to translate the current position of the mobile device as described by the GPS data into one of the location types of table 1.

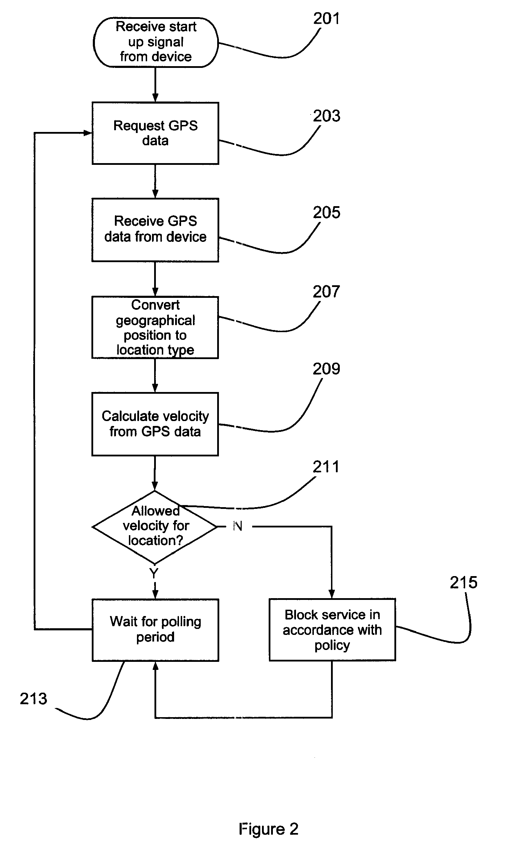

The processing carried out by the AP will now be described in further detail with reference to the flow chart of figure 2 in which at step 201, the AP receives notification from the SCP 107 that the mobile device 101 has been switched on and logged on to the network 105. Processing then moves to step 203 where the AP sends a position request message to the mobile device 101. At step 205 the AP receives the requested data in the form of GPS derived co-ordinates from the mobile device 101 and processing moves to step 207 where the position of the device is mapped, using the mapping data, to one of the location types defined in the policy of table 1.

Processing then moves to step 209 where the velocity of the device is calculated based on two sets of position data, a first set and a subsequently received second set. Processing then moves to step 211 where the AP determines if the velocity exceeds the threshold velocity for the current location type as defined in the usage policy set out in table 1. If the velocity does not exceed that for the current location then processing moves to step 213 where the AP waits for the polling period, calculated from the time of the last poll, before returning to step 203 to poll the mobile device once more.

If, however, the current velocity exceeds the threshold for the current location type then processing moves to step 215. At step 215, the AP implements the restriction associated with the current location type as defined in the usage policy of table 1. For example, if the mobile device has a position corresponding to a road and is exceeding the threshold velocity of 20 km/h for that location type then the AP will send a signal to the SCP to bar voice calling from the device. Each signal sent to the SCP overrides any signal sent in a previous polling period. In addition, if at step 209 the velocity is below the threshold then a clear signal is sent to the SCP to remove any restriction from a previous polling period.

The control of the service availability by the AP enables inappropriate, irresponsible or illegal use of a mobile device to be enforced. The mapping data enables differentiation between usage on different forms of transport such as trains, where no restriction may be necessary, and car driving where use is often restricted by law.

In another embodiment, a single velocity threshold is applied and no mapping or location data is used. In other words, a restriction on the use of the mobile device is applied above the threshold velocity regardless of the location of the device. In some embodiments, a range of velocity thresholds are defined, each associated with a service restriction and independent of location. In other embodiments, position data is substituted for the velocity which is received directly from a GPS device.

In a further embodiment, the processing described in figure 2 above is carried out by the mobile device itself, removing the need for the application server. In this embodiment, the mobile device can send signals to the SCP to restrict the services available to the device. Alternatively, the mobile device can be arranged to perform the service restrictions internally without needing to interact with the SCP. In any of these arrangements, the usage policy and or mapping data may either be held by the mobile device or held by the SCP and accessed over the network.

In some embodiments, different usage policies are arranged for different users. In some cases, a user convicted of driving offences relating to mobile phone use may have a lower velocity threshold applied to their usage policy.

In further embodiments known techniques of establishing the geographical position of a mobile device are used instead of the GPS system. These techniques include triangulation methods, which use features of the signals between the mobile device and the transceivers of the network to establish the position of the device at any given time.

In another embodiment, signal devices are installed in areas where it is desired to restrict the use of a mobile device. The signal devices transmit a signal over a physical volume or zone and a mobile device is arranged to detect the transmitted signal. Once the signal is received it is processed in accordance with a usage policy. The signals may result in the enabling of services for a mobile device within the appropriate zone which would otherwise be disabled by a velocity threshold being passed. Alternatively, the signals may result in services being disabled for devices within the appropriate zone once an associated velocity threshold has been passed.

Table 2 illustrates a usage policy held by the AP for a system incorporating such signal devices. Each signal is either a disabling signal (D) or an enabling signal (E) as shown in the first column of table 2. Each disabling signal is associated with a threshold velocity which, if exceeded by the mobile device, results in the corresponding service restriction being enforced by the system. If, however, more than one disabling signal is detected by the mobile device then the more restrictive service restriction is applied by the AP. Similarly, each enabling signal may either completely or partially override any disabling signal. For example, if signal D1 is detected by the mobile device then above 20 km/h all voice calls would be barred. If however, signal E2 is also detected then hands free calls only would be allowed over 20 km/h.

**Table 2:**

| Signal Device | Velocity Threshold | Service Restriction |
|---|---|---|
| D1 | 20 | All voice calls |
| D2 | 20 | Only hands free voice calls |
| D3 | 20 | Non voice services only |
| E1 | - | None |
| E2 | - | Only hands free voice calls |

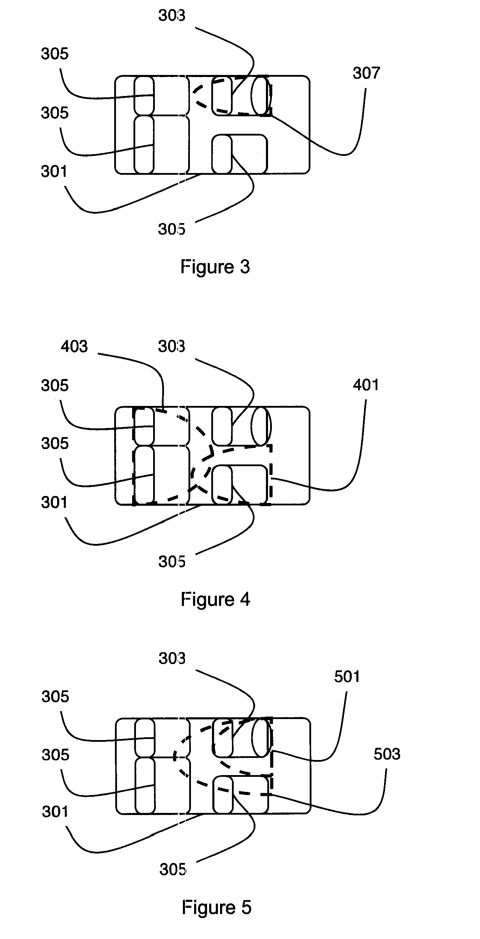

Examples of arrangements of signal devices installed in vehicles and viewed from above are illustrated in figures 3, 4 and 5. With reference to figure 3, a vehicle 301 has a driver's seat 303 and three passenger seats 305. A signal device 307 is installed so as to transmit a signal D1 covering only the zone of the vehicle likely to be occupied by the driver. The extent of the zone is indicated in figure 3 by a dotted outline. As shown in table 2, signal D1 results in any calls being barred for a mobile device travelling at over 20 km/h and will thus prevent a driver of the vehicle 301 from using a mobile device at such speeds.

Figure 4 shows a vehicle 301 in which signal devices provide a front zone 401 which covers the front passenger seat and the second zone 403 which covers the rear passengers. In this example, services to any mobile device travelling at greater than 20 km/h are barred regardless of location. However, the signal devices transmit an E1 signal which enables mobile device use within the two zones 401, 403. However, the driver is not covered by any zone and therefore will have all mobile device services disabled if travelling faster than 20 km/h.

Figure 5 shows a vehicle 301 in which signal devices provide a first zone 501 which covers the driver's seat, and a second overlapping zone 503 which covers the driver's seat and the area immediately surrounding it. The signal device for the first zone transmits a D2 signal disabling all but hands free mobile device services for the driver. The signal device for the second zone transmits an D3 signal disabling all voice mobile device services in the immediate proximity of the driver. Since the D2 signal overrides the D3 signal, then a buffer zone is provided around the driver where potentially distracting mobile device use is restricted to non voice use only.

In a further embodiment, the whole interior of a vehicle is covered by a single zone in which a disabling signal is transmitted thus restricting the mobile device services for all occupants.

In another embodiment, certain trusted individuals are issued with personal enabling tokens which transmit a signal over a zone sufficiently to cover the individual. Such tokens may be issued to emergency personnel and incorporated into a uniform, cap or identification badge. Such personal tokens or signaling devices may be keyed so as to only work with a designated mobile device. The token may, for example, transmit a E2 signal enabling all hands-free functions of the mobile device regardless of velocity or location. Use of mobile devices without such a token may be restricted by any of the suitable arrangements described above.

In some embodiments, the signal devices are replaced by proximity devices which are activated by an active mobile device coming within range. In other embodiments, the signal devices are activated by presence or pressure sensors which may be installed in vehicle seats.

In the above description, the term mobile devices refers to any device, the use of which may be dangerous or undesirable while moving. Examples of such devices include mobile telephones, computers, gaming devices or entertainment systems. The term includes devices without a network connection.

It will be understood by those skilled in the art that the apparatus that embodies a part or all of the present invention may be a general purpose device having software arranged to provide a part or all of an embodiment of the invention. The device could be single device or a group of devices and the software could be a single program or a set of programs. Furthermore, any or all of the software used to implement the invention can be communicated via various transmission or storage means so that the software can be loaded onto one or more devices.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details representative apparatus and method, and illustrative examples shown and described. Accordingly, departures may be made from such details without departure from the spirit or scope of applicant's general inventive concept.

## Claims

1. A method for managing a function of a mobile device, the method comprising the steps of:
a) receiving a first set of geographical position data for a mobile device;
b) receiving a second set of geographical position data for said mobile device;
c) calculating a velocity of said mobile device from said first and second sets of geographical position data; and
d) if said velocity exceeds a predetermined threshold velocity then at least partially disabling a function of said mobile device.

2. A method according to claim 1 comprising the further step of:
comparing said second set of data to mapping data defming one or more areas of unrestricted device use and if said data defines a geographical position of said device within one of said areas then omitting step d).

3. A method according to claim 1 comprising the further step of:
comparing said second set of data to mapping data defining one or more areas, each said area associated with a predetermined velocity threshold, and if said data defines a geographical position of said device within one said area then modifying said predetermined threshold for step d) accordingly.

4. A method according to any preceding claim in which said device is a communications device and said first and second sets of data are received from said mobile device by an element of a communications network.

5. A method according to claim 4 in which said restriction of function of said mobile device is carried out under the control of said communications network.

6. A method according to claim 4 in which any restriction of function of said mobile device is carried out by said mobile device under the instruction of said communications network.

7. A method according to any of claims 1 to 3 in which steps a) to d) are carried out by said mobile device.

8. A method according to any of claims 4 to 7 in which said mobile device is connected to said communications network via wireless transceivers and said geographical position data is derived from signals received from said device by said network using a signal triangulation process.

9. A method according to any preceding claim in which said mobile device receives a signal from one or more signal devices, said signal devices defming one or more fixed physical zones within a moveable physical space, and receipt of said signal(s) is used in conjunction with said velocity to determine said functions of said mobile device which are disabled in step d).

10. A method according to claim 9 in which one or more of said signal devices define a zone within which a function of said mobile device is enabled regardless of said velocity.

11. A method according to claim 10 in which a function of said mobile device is disabled in step d) only if a signal is received from one or more of said signal devices.

12. A method according to any of claims 1 to 8 in which a signal device is carried with said mobile device, and receipt of a signal from said signal device causes a function of said mobile device to be enabled regardless of said velocity.

13. A method according to any of claims 9 to 12 in which said signal devices define at least two zones, and receipt by the mobile device of signals for each said zone cause different functions of said mobile device to be disabled in step d).

14. Apparatus for managing a function of a mobile device comprising:
geographical position data receiver operable to receive a first set of geographical position data for a mobile device;
said receiver being further operable to receive a second set of geographical position data for said mobile device;
a processor operable to calculate the velocity of said mobile device from said first and second sets of geographical position data; and
a mobile device controller operable if said velocity exceeds a predetermined threshold velocity to at least partially disable a function of said mobile device.

15. Apparatus according to claim 14 further comprising:
mapping data defining one or more areas of unrestricted device use, and said processor being further operable to compare said second set of data to said mapping data and if said data defines a geographical position of said device within one said areas then said controller is further operable to allow unrestricted use of said mobile device regardless of said velocity.

16. Apparatus according to claims 14 or 15 further comprising:
mapping data defining one or more areas, each said area associated with a predetermined velocity threshold, and said processor is further operable to compare said second set of data to said mapping data and if said data defines a geographical position of said device within one said area then modifying said predetermined threshold for said controller accordingly.

17. Apparatus for managing a function of a mobile device comprising:
means for receiving a first set of geographical position data for a mobile device;
means for receiving a second set of geographical position data for said mobile device;
means for calculating a velocity of said mobile device from said first and second sets of geographical position data; and
means operable if said velocity exceeds a predetermined threshold velocity to at least partially disable a function of said mobile device.

18. An application server for a mobile communications network, said server comprising:
a position data receiving module for receiving geographical position data for a mobile device;
a processor operable to calculate a velocity of said mobile device from said geographical position data; and
a mobile device controller operable if said velocity exceeds a predetermined threshold velocity for at least partially disabling a function of said mobile device.

19. A mobile communications device operable to:
receive data defming the location of said device;
calculate a velocity of said device using said data; and
if said velocity exceed a threshold then to disable one or more functions of said communications device.

20. A software program or group of software programs arranged to enable a programmable device or group of programmable devices to carry out the metho d of any of claims 1 to 13 or to provide the apparatus of any of claims 14 to 17 or to provide the application server of claim 18 or to provide the mobile communications device of claim 19.
